(19) Europäisches Patentamt
European Patent Office
Office européen des brevets

(11) **EP 4 340 293 A1**

(12) **EUROPEAN PATENT APPLICATION**

(43) Date of publication:
**20.03.2024 Bulletin 2024/12**

(21) Application number: **22306367.8**

(22) Date of filing: **16.09.2022**

(51) International Patent Classification (IPC):
***H04L 9/30*** *(2006.01)*

(52) Cooperative Patent Classification (CPC):
**H04L 9/3093**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **THALES DIS FRANCE SAS**
**92190 Meudon (FR)**

(72) Inventors:
• LI, Xun
  **75015 PARIS (FR)**
• VIGILANT, David
  **92240 MALAKOFF (FR)**

(74) Representative: **Bricks, Amélie**
**Thales Dis France SAS**
**Intellectual Property Department**
**6, rue de la Verrerie**
**92190 Meudon (FR)**

(54) **METHOD FOR PERFORMING POLYNOMIAL MULTIPLICATION OPERATIONS**

(57) The present invention relates to a method for performing a cryptographic algorithm, performed by a cryptographic device comprising a cryptographic coprocessor comprising an integer multiplier, said cryptographic algorithm comprising a polynomial multiplication between a first input polynomial A[X] and a second input polynomial B[X], wherein the first input polynomial A[X] comprises $N_{cm}$ coefficients and the second input polynomial B[X] comprises $N_{cn}$ coefficients and said coefficients of the first and second input polynomials are of size $N_b$ bits, with Ncm, $N_{cn}$ and $N_b$ non-zero integers, said method comprising :

a) computing a polynomial result C[X] of a polynomial multiplication between said first input polynomial A[X] and said second input polynomial B[X] by :
- for the first input polynomial A[X], generating a concatenated integer $A_x$ as a concatenation of the coefficients of said first input polynomial, each coefficient being extended to a size $N_e$ with

$$N_e \geq \lceil \log_2 Ncm \rceil + 2 * N_b$$ by inserting zeros as Most Significant Bits of said concatenated coefficients,
- obtaining each coefficient ci of the polynomial result by :
o for i an integer from 0 to $N_{cn}$-1, wherein bi is the i-order coefficient of the second input polynomial B[X]:
▪ computing an intermediate value $R_i$ using said integer multiplier by multiplying said generated concatenated integer with said coefficient bi of the second input polynomial B[X] such that : $Ri = R_{i-1} + A_x * bi$ where $R_{-1}$ is equal to the value 0,
▪ storing the $N_e$ least significant bits of the intermediate value $R_i$ as the $i^{th}$ coefficient $c_i$ of the polynomial result C[X],
▪ applying a $N_e$-bits right shift operation to the intermediate value *Ri*,

o when i = $N_{cn}$-1, for j an integer from $N_{cn}$ to Ncn+Ncm-2 :
▪ storing the $N_e$ least significant bits of the intermediate value $R_i$ as the $j^{th}$ coefficient cj of the polynomial result C[X],
▪ applying a $N_e$-bits right shift operation to the intermediate value Ri,

b) performing said cryptographic algorithm using said determined polynomial result.

**Fig. 6**

| | 0 | 3 | 0 | 2 | A |
| --- | --- | --- | --- | --- | --- |
| | | | | 4 | b0 |
| R0 | 1 | 2 | 0 | 8 | c0=08 |
| R0>>2 | 0 | 0 | 1 | 2 | |

| | 0 | 3 | 0 | 2 | A |
| --- | --- | --- | --- | --- | --- |
| | | | | 5 | b1 |
| | 1 | 5 | 1 | 0 | |
| R1 | 1 | 5 | 2 | 2 | c1=22 |
| R1>>2 | 0 | 0 | 1 | 5 | c2=15 |

**Description**

**FIELD OF THE INVENTION**

The present invention relates to the field of cryptographic methods and devices, and more particularly to an efficient method for performing polynomial multiplication operations.

**BACKGROUND OF THE INVENTION**

Cryptographic algorithms are commonly used for ensuring the privacy of communications by encryption, for authentication or for generating a verifiable signature. The increasing computational power of quantum computers is a growing threat to the security of classical schemes such as RSA or ECDSA, which will eventually be completely defenseless against attacks performed using quantum computers. Therefore, work is being done to develop new efficient cryptographic algorithms that would be resistant against such attacks.

A class of cryptographic algorithms able to resist quantum computers is lattice-based cryptographic algorithms. Such cryptographic algorithms are well positioned to be the next standard for post quantum cryptography. A drawback of such algorithms is that they make an extensive use of polynomial multiplications. Since existing devices don't come with any coprocessor dedicated to such multiplications, such operation have to be computed using the CPU and their cost strongly grows as the number and size of polynomials coefficients increases. Methods have been developed in order to boil down a polynomial multiplication between large polynomials to series of polynomial multiplications between smaller polynomials, such as Karatsuba (https://en.wikipedia.org/wiki/Karatsuba algorithm), Toom-Cook (https://en.wikipedia.org/wiki/Toom%E2%80%93Cook_multiplication) or methods based on Number Theoric Transform (NTT) (https://en.wikipedia.org/wiki/Discrete Fourier transform (general)).

Nevertheless, the cost of performing a polynomial operation between two large polynomials, such as 256-coefficients polynomials, remains prohibitive for light devices, with low CPU power and memory size, such as smartcards and IoT devices, even when using such advanced methods.

Therefore, there is a need for a method enabling to compute polynomial multiplications between large polynomials at a lower cost than existing methods.

**SUMMARY OF THE INVENTION**

For this purpose and according to a first aspect, this invention therefore relates to a method for performing a cryptographic algorithm, performed by a cryptographic device comprising a cryptographic co-processor comprising an integer multiplier, said cryptographic algorithm comprising a polynomial multiplication between a first input polynomial A[X] and a second input polynomial B[X], wherein the first input polynomial A[X] comprises $N_{cm}$ coefficients and the second input polynomial B[X] comprises $N_{cn}$ coefficients and said coefficients of the first and second input polynomials are of size $N_b$ bits, with $N_{cm}$, $N_{cn}$ and $N_b$ non-zero integers, said method comprising :

　　a) computing a polynomial result C[X] of a polynomial multiplication between said first input polynomial A[X] and said second input polynomial B[X] by :

　　　　- for the first input polynomial A[X], generating a concatenated integer $A_x$ as a concatenation of the coefficients of said first input polynomial, each coefficient being extended to a size $N_e$ with $N_e \geq \lceil \log_2 Ncm \rceil + 2 * N_b$
　　　　by inserting zeros as Most Significant Bits of said concatenated coefficients,
　　　　- obtaining each coefficient $c_i$ of the polynomial result by :

　　　　　　∘ for i an integer from 0 to $N_{cn}-1$, wherein $b_i$ is the i-order coefficient of the second input polynomial B[X]:

　　　　　　　　▪ computing an intermediate value $R_i$ using said integer multiplier by multiplying said generated concatenated integer with said coefficient $b_i$ of the second input polynomial B[X] such that: $Ri = R_{i-1} + A_x * b_i$ where $R_{-1}$ is equal to the value 0,
　　　　　　　　▪ storing the $N_e$ least significant bits of the intermediate value $R_i$ as the $i^{th}$ coefficient $c_i$ of the polynomial result C[X],
　　　　　　　　▪ applying a $N_e$-bits right shift operation to the intermediate value $Ri$, ∘ when i = $N_{cn}-1$, for j an integer from $N_{cn}$ to $N_{cn}+N_{cm}-2$ :
　　　　　　　　▪ storing the $N_e$ least significant bits of the intermediate value $R_i$ as the $j^{th}$ coefficient $c_j$ of the polynomial

result C[X],

- applying a $N_e$-bits right shift operation to the intermediate value $R_i$,

b) performing said cryptographic algorithm using said determined polynomial result.

Such a method enables to compute polynomial multiplications between large polynomials at a low cost by narrowing it to one or more integer multiplications without additional complexity due to the carry of the integer multiplications.

Before the step of generation said concatenated integer, coefficients of said input polynomials may be masked using additive or multiplicative masking, and said masked coefficients may be used for generating said concatenated integer.

Before the step of computing an intermediate value $R_i$ using said integer multiplier by multiplying said generated concatenated integer with a first coefficient $b_0$ of the second input polynomial B[X], said concatenated integer and said coefficients of the second input polynomial may be masked using multiplicative blinding, and said masked concatenated integers and coefficients may be used for computing said intermediate values.

Such masking techniques enable to protect the polynomial multiplication according to the invention against side-channel attacks.

The cryptographic algorithm may be among: a signature generation, a signature verification, encapsulation, decapsulation, public key encryption or decryption, password-based key exchange algorithm.

According to a second aspect, this invention therefore relates also to a computer program product directly loadable into the memory of at least one computer, comprising software code instructions for performing the steps of the method according to the first aspect when said product is run on the computer.

According to a third aspect, this invention therefore relates also to a non-transitory computer readable medium storing executable computer code that when executed by a cryptographic device comprising a processing system having at least one hardware processor performs the method according to the first aspect.

According to a fourth aspect, this invention therefore relates also to a cryptographic device comprising:

- a processing system having at least one hardware processor and a cryptographic co-processor comprising an integer multiplier configured to perform the method according to the first aspect,
- at least one memory for storing the input polynomial coefficients and the results of the calculations performed during the different computing steps.

## BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.

- Figure 1 is a schematic illustration of a system according to an embodiment of the present invention;
- Figure 2 is a schematic illustration of a cryptographic device according to an embodiment of the present invention;
- Figure 3 illustrates schematically a polynomial multiplication performed according to prior art;
- Figure 4 illustrates schematically a polynomial multiplication performed according to an embodiment of the present invention;
- Figure 5 illustrates schematically a method according to an embodiment of the present invention;
- Figure 6 illustrates schematically the operations performed by the cryptographic device according to an embodiment of the present invention

## DETAILED DESCRIPTION OF EMBODIMENTS OF THE INVENTION

The invention aims at providing a method performing efficiently a polynomial multiplication operation of a cryptographic algorithm. Such a cryptographic algorithm may for example be used for signature generation, encapsulation, decapsulation, public key encryption or decryption, optionally homomorphic, password-based key exchange algorithm. This cryptographic algorithm may be a lattice-based cryptographic scheme such as Saber, Kyber or Dilithium.

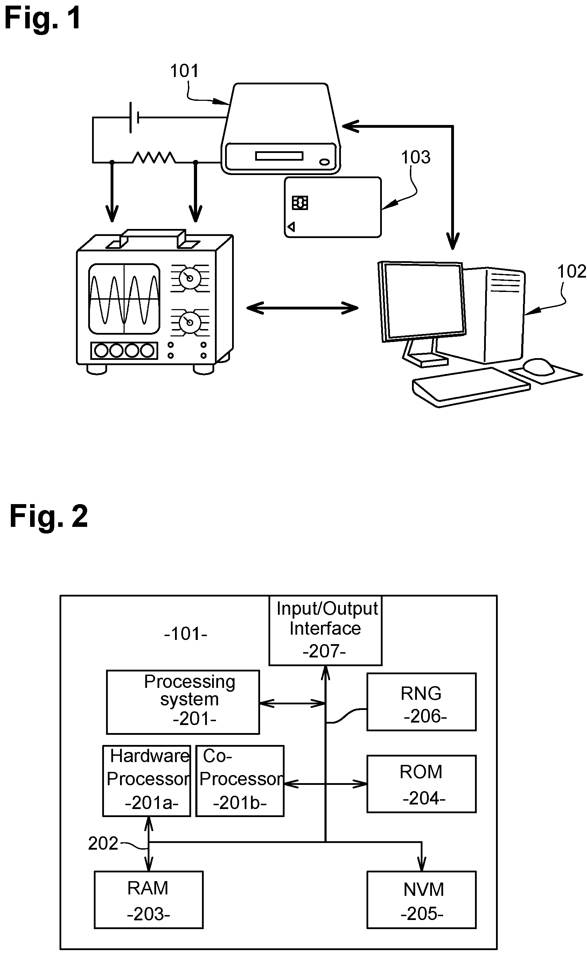

As depicted on **Figure 1**, this method, and possibly the other steps of the cryptographic algorithm, is performed by a cryptographic device 101. Such a cryptographic device 101 may be connected to a personal computer or server 102 operated by a user and sending commands to the cryptographic device for cryptographic operations such as data encryption or decryption. Alternatively, the cryptographic device 101 may be embedded in the computer 102.

The cryptographic device 101 includes a processing system having at least one hardware processor and a cryptographic co-processor for performing cryptographic operations, and at least one memory configured for storing the data needed for such operations, such as the coefficients of the polynomials used as input to the polynomial operations, intermediate results, mask values... Such a processing system may be comprised in a tamper resistant device 103 secured against any unauthorized access, integrated in the cryptographic device. As an example, the cryptographic device may be a smartcard reader housing a smartcard device, or an electronic device, such as a smartphone or an IoT device, possibly including an integrated or embedded secure element or secured microcontroller. The cryptographic device may also be a dedicated hardware security module.

As depicted on **Figure 2**, the cryptographic device 101 may include a processing system 201 having at least one hardware processor 201a and a cryptographic co-processor 201b comprising an integer multiplier, such as a RSA or ECC coprocessor, connected via a bus 202 to a computer readable memory circuit including a random access memory (RAM) 203, a read-only memory (ROM) 204, and/or a non-volatile memory (NVM) 205. The cryptographic device 101 may also include a random number generator (RNG) 206, included in the hardware processor or connected to it via the bus. The cryptographic device 101 may further include an interface 207 used to connect the cryptographic device 101 to the computer 102. Such an interface may be either a wired interface such as a USB or Thunderbolt interface, or a wireless interface, such as a Bluetooth interface. The interface 207 may also be a communication interface used to connect the cryptographic device 101 to a wireless network, e.g., wide-area networks, WiFi networks, or mobile telephony networks, or to a wired interface such as an Ethernet one, through which communication may be performed with the computer 102.

A first main idea of the invention in order to make polynomial multiplication much faster is to transform it into a multiplication between two integers by concatenating all the coefficients of each polynomial into a long integer; and to use the co-processor of the processing means to perform this operation at low cost.

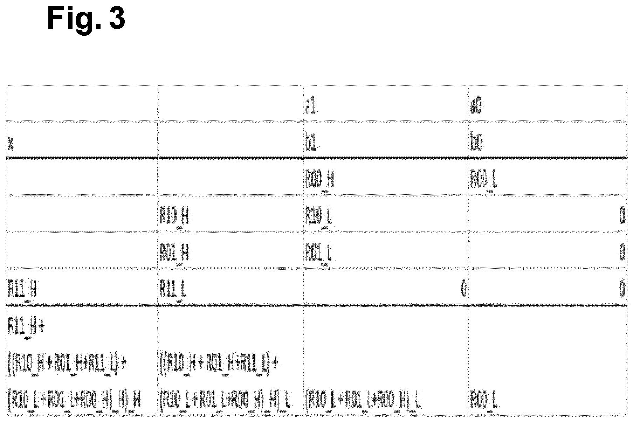

In order to be useful for computing the polynomial multiplication, it must be possible to retrieve the coefficients of the sought polynomial, resulting from the polynomial multiplication, from the result of the corresponding integer multiplication. This is not the case in general because of the multiplication carry. As an example, let us say we want to compute the polynomial multiplication between $A[X] = a0+a1*X$ and $B[X]=b0+b1*X$ with $a0$, $a1$, $b0$ and $b1$ N-bits integers and let us consider the notations $Rij = ai*bj$, "_H" the division by $2^N$, "_L" the result of a modulo $2^N$ operation. As shown on **Figure 3**, computing the multiplication of a first integer equal to the concatenation of $a1|a0$ with a second integer equal to $b1|b0$, with "|" the concatenation operator, gives a result from which no coefficient of $A*B$ can be retrieved easily because in each section of the result many different $Rij$ terms are superimposed as a result of the carry application.

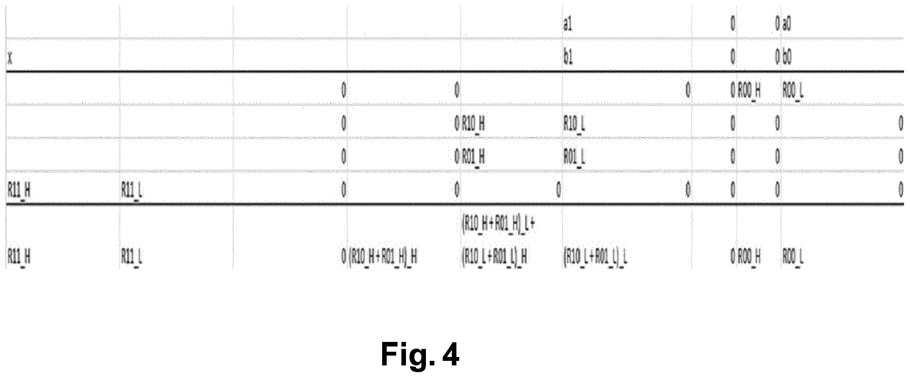

Therefore, a second main idea of the invention is to insert enough zeroes between the coefficients of the polynomials when concatenating them into long integers to avoid such a superimposition of terms when computing the multiplication between the two integers. An example is given on **Figure 4**. As in the case of Figure 3, we try to compute the coefficients of the polynomial equal to $A[X]*B[X]$ by computing the multiplication of two integers formed by concatenating the coefficients of $A[X]$ and $B[X]$ but this time we compute the multiplication of $a1|0...0|a0$ with $b1|0...0|b0$. By doing so, we obtain a result from which the different $Rij$ terms may be recovered easily.

A drawback of such an approach is that in order to be able to compute the multiplication between the two integers each obtained by extending the coefficients of a polynomial using zeroes and concatenating them, the size of each integer, zeroes included, must be lower than half the maximal length supported by the coprocessor performing the calculation. This greatly restricts the applicability of such a method for computing a polynomial multiplication between polynomials of high order and/or with large coefficients, such as polynomial used in SABER, Dilithium or Kyber which have typically up to 256 23-bit coefficients (before zero-extension).

Therefore, a third idea of the invention is to apply such a zero-extension and concatenation to one of the two polynomials to be multiplied only; and to multiply it one-by-one with the coefficients of the second polynomial. By doing so, the number and size of the coefficients of the second polynomial is not limited, and the integer obtained by extension and concatenation of the first polynomial can be nearly the size of the maximal length supported by the coprocessor. For example, contrarily to the case of Figure 3, we try to compute the coefficients of the polynomial equal to $A[X]*B[X]$ by computing first the multiplication of the integer formed by concatenating the coefficients of $A[X]$ with one coefficient of $B[X]$ ($a1|0...0|a0$ x $b0$); and then by computing the multiplication of the integer formed by concatenating the coefficients of $A[X]$ with the other coefficient of $B[X]$ ($a1|0...0|a0$ x $b1$).

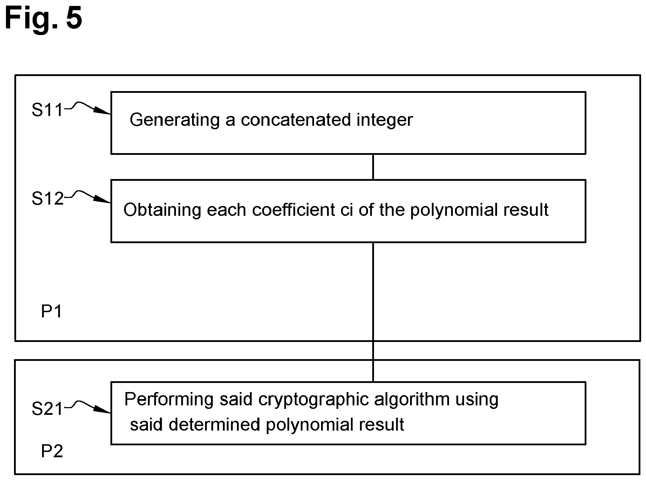

The following paragraphs describe, as depicted on **Figure 5**, the steps of a **method** according to the invention to perform a cryptographic algorithm comprising a polynomial multiplication between a first input polynomial $A[X]$ and a second input polynomial $B[X]$.

The first input polynomial $A[X]$ and the second input polynomial $B[X]$ comprise respectively Ncm and Ncn coefficients of size $N_b$ bits, with Ncm, Ncn and $N_b$ non-zero integers. As an example, the numbers of coefficients $N_{cm}$ and $N_{cn}$ may be equal to a power of two such as 32, 64, 128 or 256, and the size of the coefficients $N_b$ may be equal to 10 or 13.

The method according to the invention may comprise two phases : a multiplication phase P1 during which the cryptographic device computes a polynomial result C[X] of the polynomial multiplication between said first input polynomial A[X] and said second input polynomial B[X]; and a cryptographic computation phase P2 during which the cryptographic device performs steps of the cryptographic algorithm using the polynomial result determined at the end of the multiplication phase. In addition, some steps of the cryptographic algorithm, which are independent of the polynomial result, may be performed before the multiplication phase P1 or during the execution of the multiplication phase in parallel to it.

The multiplication phase P1 comprises an integer generation step S11 during which the cryptographic device generates, for the first input polynomial A[X], a concatenated integer $A_x$ as a concatenation of the coefficients of the first input polynomial, each coefficient being extended to an extension size $N_e$ with $N_e \geq \lceil \log_2 Ncm \rceil + 2 * N_b$ by inserting zeros as Most Significant Bits MSB of said concatenated coefficients. Selecting such an extension size ensures that, in the result of the multiplication of $A_x$ with a coefficient of B[X], terms won't be superimposed as a result of the carry application and that the coefficients of A[X]*B[X] can be easily recovered from the multiplication results of $A_x$ with all the coefficients of B[X].

During this step, the cryptographic device may either first extend the size of each coefficient to the extension size $N_e$ by inserting zeros and then concatenate the extended coefficients into the concatenated integer, or first concatenate the original coefficients of the first input polynomial into an intermediary integer and then generate the concatenated integer by inserting zeros between each group of bits of the intermediary integer corresponding to an original coefficient. In both cases, the coefficients of the first input polynomial shall be concatenated from the highest order coefficient to the lowest order coefficient, such that the most significant bits of the concatenated integer $A_x$ correspond to the highest order coefficient of the first input polynomial.

As an example, if the first input polynomial A[X] is equal to $\sum_{i=0}^{i=9} ai * x^i$ with a size of the coefficients $N_b$ equal to 10 and

    a0 = 1000000001
    a1 = 1000000011
    a2 = 1000000101
    a3 = 1000001001
    a4 = 1000010001
    a5 = 1000100001
    a6 = 1001000001
    a7 = 1010000001
    a8 = 1100000001
    a9 = 1111111111
    then, the concatenated integer $A_x$ for A[X] when the extension size Ne is equal to 12 will be

| a9 | a8 | a7 | a6 | a5 |
|---|---|---|---|---|
| 001111111111 | 001100000001 | 001010000001 | 001001000001 | 001000100001 |

| a4 | a3 | a2 | a1 | a0 |
|---|---|---|---|---|
| 001000010001 | 001000001001 | 001000000101 | 001000000011 | 001000000001 |

Thanks to the zeros inserted in the concatenated integer and spacing the original coefficients of the first input polynomial from each other, the multiplication carry does not generate an extra mixing of Rij terms in the multiplication result.

The multiplication phase P1 then comprises a coefficient determination step S12 during which the cryptographic device computes one by one, using said integer multiplier of the co-processor, each coefficient of the polynomial result C[X] from the concatenated integer $A_x$ generated at the integer generation step S11 and the second input polynomial B[X].

In order to do so, for each coefficient of the second input polynomial B[X], starting from the lowest order coefficient, the cryptographic device multiplies the concatenated integer $A_x$ by one coefficient of the second input polynomial B[X] and adds the carry from the multiplication of the concatenated integer $A_x$ with the previous coefficient of the second input polynomial B[X]. Each such multiplication of the concatenated integer $A_x$ by one coefficient of the second input polynomial B[X] and addition of a carry gives one coefficient of the polynomial result C[X].

More precisely for i an integer from 0 to $N_{cn-1}$, with bi the i-order coefficient of the second input polynomial B[X], the cryptographic device performs the following steps, the execution of which, for one value of i, is called hereafter a "round":

- the cryptographic device computes an intermediate value $R_i$ using its integer multiplier by multiplying the concatenated integer $A_x$ with the coefficient bi of the second input polynomial B[X] such that: $Ri = R_{i-1} + A_x * bi$ where $R_{-1}$ is equal to the value 0. At the end of this step, the intermediate value $R_i$ sums up the result of the multiplication of the concatenated integer $A_x$ with the coefficient bi and the previous value of the intermediate value, $R_{i-1}$. This previous value is the result of the last round of computation of these steps, with the previous coefficient $b_{i-1}$ of the second input polynomial. Given the last step of the round described here below, $R_{i-1}$ corresponds to the accumulated carry of the previous rounds.
- the cryptographic device stores the $N_e$ least significant bits of the intermediate value Ri as the $i^{th}$ coefficient ci of the polynomial result C[X]. These $N_e$ least significant bits indeed correspond to the result of multiplying the lowest order coefficient of the first input polynomial with the coefficient bi, summed up with the carry of contribution to the coefficient ci coming from the multiplication of the first input polynomial with all the coefficients b0 to bi-1 processed in the previous rounds. If necessary, a modulo operation may be applied to the $N_e$ least significant bits of the intermediate value Ri before storing it as the $i^{th}$ coefficient ci of the polynomial result C[X], in order to reduce it to the modulus of the coefficients of the polynomials A[X] and B[X].
- the cryptographic device applies a $N_e$-bits right shift operation to the intermediate value $Ri$. Such a shift enables to get the intermediate value rid of the coefficient ci and to keep in it only the contributions of the multiplications of the first input polynomial A[X] with all the already processed coefficients b0 to bi to the next coefficients ci+1, ci+2... of the polynomial result C[X].

When these steps have been performed for i = Ncn-1, the remaining intermediate value $R_{N_{cn}-1}$ still has to be taken into account as the higher order coefficients $c_{N_{cn}}$ to $c_{N_{cn}}+N_{cm}-2$ of the polynomial result C[X]. Therefore, for j an integer from $N_{cn}$ to $N_{cn}+N_{cm}-2$, the cryptographic device:

- stores the $N_e$ least significant bits of the intermediate value Ri as the coefficient cj;
- applies a $N_e$-bits right shift operation to the intermediate value Ri.

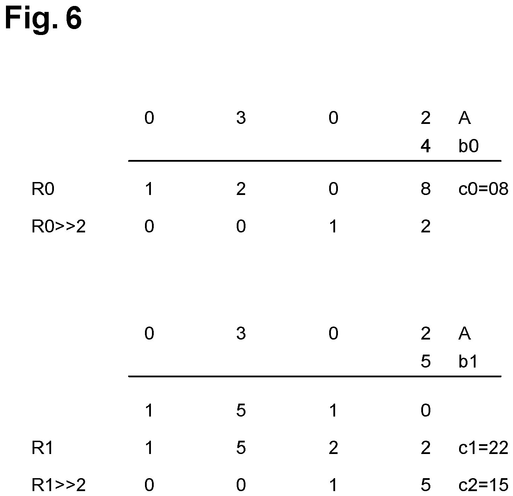

Finally, the cryptographic device performs steps of the cryptographic algorithm using the polynomial result C[X] determined at the end of the multiplication phase in a computation step S21 of the cryptographic computation phase P2.
As an example, suppose A[X]=3*X+2 and B[X]=5*X+4. As shown on Figure 6, the following operations are performed by the cryptographic device according to the method described above :

- During the integer generation step S11, the cryptographic devices concatenates the coefficients a0=2 and a1=3 of the first input polynomial. It also extends their size by inserting one zero in front of each. Therefore the concatenated integer $A_x$ is equal to 0302.

- At the first round of the coefficient determination step S12, the cryptographic devices multiples the concatenated integer $A_x$ with the coefficient b0= 4 of the second input polynomial. The result is the intermediate value R0=1208.

- The cryptographic devices stores the 2 last digits "08" of the intermediate value R0 as the coefficient c0 of the polynomial result.

- The cryptographic device applies a 2-digit right shift to the intermediate value R0, which is now equal to 0012.

- At the second round of the coefficient determination step S12, the cryptographic devices multiples the concatenated integer $A_x$ with the coefficient b1= 5 of the second input polynomial. The result, equal to 1510 is added to the intermediate value R0=0012 to form the updated intermediate value R1=1522.

- The cryptographic devices stores the 2 last digits "22" of the intermediate value R1 as the coefficient c1 of the polynomial result.

- The cryptographic device applies a 2-digit right shift to the intermediate value R1, which is now equal to 0015

- Since all coefficients of the second input polynomial have been processed, the cryptographic device ends the coefficient determination step S12 by storing the 2 last digits "15" of the intermediate value R1 as the coefficient c2 of the polynomial result.

By multiplying the concatenated integer $A_x$ with the coefficients of the second input polynomial one by one, the length of the values generated by the operations is limited to 4 digits, while the direct multiplication of the concatenated integer $A_x$ with a corresponding concatenated integer generated from the second input polynomial would have generated a 6 digits long result equal to 152208, and would have required the cryptographic device to handle such a bigger length.

The steps described above produce an intermediate value Ri whose size never exceeds $N_e * N_{cn} + N_b$. Therefore this method enables to compute the polynomial result provided the maximal length supported by the coprocessor performing the calculation is above that maximal size of the intermediate value Ri. This limitation is mainly driven by the size $N_b$ and number $N_{cn}$ of the coefficients of the first input polynomial A[X]. In the following paragraphs, we call Nmax the maximum number of coefficients $N_{cn}$ of the first input polynomial such that the maximal size of the intermediate value Ri remains lower than the maximal length supported by the coprocessor of the cryptographic device.

In order to overcome this limitation, the first input polynomial may be split into several smaller polynomials; and the method described above may be used to compute the products of each of said smaller polynomials with the second input polynomial B[X].

As an example, the cryptographic device may:

- decompose the first input polynomial A[X] into a series of polynomials Ak[X] such that $A[X] = \Sigma_k Ak[X] * X^{k*Nmax}$,
- compute for each polynomial Ak[X] a partial polynomial result Ck[X], which results from the polynomial multiplication between the polynomial Ak[X] and the second input polynomial B[X] according to the steps described above,
- compute, from the partial polynomial results Ck[X], the polynomial result C[X] of the polynomial multiplication between the first input polynomial A[X] and the second input polynomial B[X].

Doing so enables to compute the result of a polynomial multiplication between two input polynomials of any size, without using Karatsuba method.

As an example, when Nmax = 64, Ncn=Ncm = 256

$$A = A_0 + A_1 * x^{64} + A_2 * x^{128} + A_3 * x^{192}$$

*where $A_i$ has 64 coefficients and*

$$A * B = A_0 * B + A_1 * B * x^{64} + A_2 * B * x^{128} + A_3 * B * x^{192}$$

$A_0 * B$ gives a partial polynomial result Ck[X] contributing to the coefficients of degrees 0 to 318 of the polynomial result C[X];
$A_1 * B$ gives a partial polynomial result Ck[X] contributing to the coefficients of degrees 64 to 382 of the polynomial result C[X];
$A_2 * B$ gives a partial polynomial result Ck[X] contributing to the coefficients of degrees 128 to 446 of the polynomial result C[X];
$A_3 * B$ a partial polynomial result Ck[X] contributing to the coefficients of degrees 192 to 510 of the polynomial result C[X].

Optionally, instead of multiplying the concatenated integer $A_x$ with the coefficients of the second input polynomial one by one, the cryptographic device may generate small integers each corresponding to the concatenation and extension of several coefficients of the second input polynomial, and the concatenated integer $A_x$ may be multiplied one by one by each of these small integers, one at each round of the coefficient determination step S12.

In some cryptographic algorithms such as Kyber or Dilithium, polynomial multiplication is performed in a polynomial ring, modulo another polynomial $M[X] = X^L + 1$ (known as cyclotomic polynomial), with L an integer. In this ring, $M[X] = X^L + 1 = 0$, i.e. $X^L = -1$. Optionally, this could be taken directly in consideration with the invention when accumulating partial results in polynomial C. Indeed, for all monomials $Ai*B*X^K$ for which K strictly greater than L accumulated in Ck[X], $Ai*B*X^K = (-1)^{floor(K/L)}*Ai*B*X^{K \bmod L}$. If we consider the previous example with L = 256.

$$A * B = A_0 * B + A_1 * B * x^{64} + A_2 * B * x^{128} + A_3 * B * x^{192}$$

By rewriting

$$B = B_0 + B_1 * x^{64} + B_2 * x^{128} + B_3 * x^{192}$$

We have

$$A * B = A_0 * (B_0 + B_1 * x^{64} + B_2 * x^{128} + B_3 * x^{192})$$
$$+ A_1 * (B_0 + B_1 * x^{64} + B_2 * x^{128} + B_3 * x^{192}) * x^{64}$$
$$+ A_2 * (B_0 + B_1 * x^{64} + B_2 * x^{128} + B_3 * x^{192}) * x^{128}$$
$$+ A_3 * (B_0 + B_1 * x^{64} + B_2 * x^{128} + B_3 * x^{192}) * x^{192}$$

Then

$$A * B = A_0 * B_0 + x^{64} * A_0 * B_1 + x^{128} * A_0 * B_2 + x^{192} * A_0 * B_3$$
$$+ x^{64} * A_1 * B_0 + x^{128} * A_1 * B_1 + x^{192} * A_1 * B_2 + x^{256} * A_1 * B_3$$
$$+ x^{128} * A_2 * B_0 + x^{192} * A_2 * B_1 + x^{256} * A_2 * B_2 + x^{320} * A_2 * B_3$$
$$+ x^{192} * A_3 * B_0 + x^{256} * A_3 * B_1 + x^{320} * A_3 * B_2 + x^{384} * A_3 * B_3$$

Then

$$A * B = A_0 * B$$
$$+ x^{64} * A_1 * B_{012}$$
$$- A_1 * B_3$$
$$+ x^{128} * A_2 * B_{01}$$
$$- A_2 * B_{23}$$
$$+ x^{192} * A_3 * B_0$$
$$- A_3 * B_{123}$$

with

$$B_{01} = B_0 + B_1 * x^{64}$$

$$B_{23} = B_2 + B_3 * x^{64}$$

$$B_{012} = B_0 + B_1 * x^{64} + B_2 * x^{128}$$

$$B_{123} = B_1 + B_2 * x^{64} + B_3 * x^{128}$$

In order to protect a polynomial multiplication performed according to the method presented above against side channel attacks, the coefficients of the input polynomials A[X] and B[X] may be blinded.

In a first embodiment, at the integer generation step S11, before generating the concatenated integer, the coefficients of the first and second input polynomials are masked using a multiplicative masking. For example, each coefficient of A[X] ai with i in {0,..., Nc -1} may be multiplied by a random mask rnd modulo q with q=2^Nb, and each coefficient of B[X] bi with i in {0,..., Nc -1} may be masked by the inverse of the mask used for masking the coefficient of A[X] with the same index. By doing so, the product of the mask coefficients with the same index is equal to the product of the original coefficients of this index.

$$a_i' = a_i * rnd \ \% \ q, b_i' = bi * rnd^{-1} \ \% \ q$$

$$a_i' * b_i' = a_i * b_i \ \% \ q$$

A unique random mask may be used for all the coefficients of A[X] or a different coefficient may be used for each coefficient.

The masked coefficients are then used by the cryptographic device for generating the concatenated integer.

In a second embodiment, at the integer generation step S11, before generating concatenated integer, the coefficients of at least one input polynomial are masked using an additive masking. For example, a random mask rnd1 may be multiplied by q=2^Nb and added to each coefficient of A[X] ai with i in {0,..., Nc -1} , and a random mask rnd2 may be multiplied by q=2^Nb and added to each coefficient of B[X] bi with i in {0,..., Nc -1}. By doing so, the product of the mask coefficients with the same index is equal to the product of the original coefficients of this index plus a random value depending on rnd1 and rnd2 that is a multiple of q and may be removed by a simple modulo q operation.

$$a_i' = a_i + rnd1 * q, b_i' = bi + rnd2 * q$$

$$a_i' * b_i' = a_i * b_i + rnd1 * q * b_i + rnd2 * q * a_i + rnd1 * rnd2 * q^2$$

The masked coefficients are then used by the cryptographic device for generating the concatenated integer.

In a third embodiment, at the integer multiplication step S12, before computing using the integer multiplier the multiplication of the generated concatenated integer with the first coefficient of the second input polynomial, the concatenated integer and the coefficients of the second input polynomial are masked using multiplicative blinding. For example, if the concatenated integer corresponding to A[X] is noted "a" and the coefficient of the second input polynomial is noted "b", "a" may be masked using a random number $r_1$ and "b" using another random number $r_2$, a modulo q with q=2^Nb being applied to each group of bits corresponding to an original coefficient of the first input polynomial. The masked concatenated integer and the masked coefficients of the second input polynomial are then used for computing the multiplication of concatenated integer and the coefficient and the result of the product a*b may be retrieved by multiplying the masked multiplication result by the inverse of the random masks $r_1$ and $r_2$.

$$c = [(a * r_1) * (b * r_2) \% q] * (r_1 * r_2)^{-1} \ \% \ q$$

Finally, the method according to the invention enables to compute polynomial multiplications between large polynomials at a low cost by narrowing it to one or more series of integer multiplications. It can even be easily protected against side channel analysis by applying additive or multiplicative blinding to the inputs of the integer multiplications.

According to a second aspect, this invention therefore relates also to a computer program product directly loadable into the memory of at least one computer, comprising software code instructions for performing the steps of the method described here above when said product is run on the computer.

According to a third aspect, this invention therefore relates also to a non-transitory computer readable medium storing executable computer code that when executed by a cryptographic device comprising a processing system having at least one hardware processor performs the method described here above.

According to a fourth aspect, this invention therefore relates also to a cryptographic device 101 illustrated in figure 2 and comprising :

- a processing system having at least one hardware processor 201a and a cryptographic co-processor 201b comprising an integer multiplier, said processing system being configured to perform the steps of the methods according to the first aspect,
- at least one memory 203, 204, 205 for storing the input polynomial coefficients and the results of the calculations performed during the different computing steps.

**Claims**

1. A method for performing a cryptographic algorithm, performed by a cryptographic device (101) comprising a cryptographic co-processor (201b) comprising an integer multiplier,

    said cryptographic algorithm comprising a polynomial multiplication between a first input polynomial A[X] and a second input polynomial B[X], wherein the first input polynomial A[X] comprises $N_{cm}$ coefficients and the second input polynomial B[X] comprises $N_{cn}$ coefficients and said coefficients of the first and second input polynomials are of size $N_b$ bits, with $N_{cm}$, $N_{cn}$ and $N_b$ non-zero integers,
    said method comprising :

        a) computing (P1) a polynomial result C[X] of a polynomial multiplication between said first input polynomial A[X] and said second input polynomial B[X] by :

            - for the first input polynomial A[X], generating (S11) a concatenated integer $A_x$ as a concatenation of the coefficients of said first input polynomial, each coefficient being extended to a size $N_e$ with

$$N_e \geq \lceil \log_2 Nc\,m \rceil + 2 * N_b$$

by inserting zeros as Most Significant Bits of said concatenated coefficients,
            - obtaining (S12) each coefficient ci of the polynomial result by :

                ○ for i an integer from 0 to $N_{cn}$-1, wherein bi is the i-order coefficient of the second input polynomial B[X]:

                    ▪ computing an intermediate value $R_i$ using said integer multiplier by multiplying said generated concatenated integer with said coefficient bi of the second input polynomial B[X] such that: $Ri = R_{i-1} + A_x * bi$ where $R_{-1}$ is equal to the value 0,
                    ▪ storing the $N_e$ least significant bits of the intermediate value $R_i$ as the ith coefficient $c_i$ of the polynomial result C[X],
                    ▪ applying a $N_e$-bits right shift operation to the intermediate value $Ri$,

                ○ when i = $N_{cn}$-1, for j an integer from $N_{cn}$ to $N_{cn}$+$N_{cm}$-2 :

                    ▪ storing the $N_e$ least significant bits of the intermediate value $R_i$ as the jth coefficient cj of the polynomial result C[X],
                    ▪ applying a $N_e$-bits right shift operation to the intermediate value $R_i$,

        b) performing (S21) said cryptographic algorithm using said determined polynomial result.

2. The method of claim 1, wherein, before generating said concatenated integer (S11), coefficients of said input polynomials are masked using additive or multiplicative masking, and said masked coefficients are used for generating said concatenated integer.

3. The method of claim 1 or 2, wherein, before computing an intermediate value $R_i$ using said integer multiplier by multiplying said generated concatenated integer with a first coefficient $b_0$ of the second input polynomial B[X], said concatenated integer and said coefficients of the second input polynomial are masked using multiplicative blinding, and said masked concatenated integers and coefficients are used for computing said intermediate values.

4. The method of any one of claims 1 to 3, wherein the cryptographic algorithm is among: a signature generation, a signature verification, encapsulation, decapsulation, public key encryption or decryption, password-based key exchange algorithm.

5. A computer program product directly loadable into the memory of at least one computer, comprising software code instructions for performing the steps of any one of claims 1 to 4 when said product is run on the computer.

6. A non-transitory computer readable medium storing executable computer code that when executed by a cryptographic device (101) comprising a processing system (201) having at least one hardware processor (201a) performs the steps of any one of claims 1 to 4.

7. Cryptographic device (101) comprising :

   - a processing system (201) having at least one hardware processor (201a) and a cryptographic co-processor (201b) comprising an integer multiplier configured to perform the steps of any one of claims 1 to 4,
   - at least one memory (203, 204, 205) for storing the input polynomial coefficients and the results of the calculations performed during the different computing steps.

# Fig. 1

# Fig. 2

# Fig. 3

| | | a1 | a0 |
|---|---|---|---|
| | | b1 | b0 |
| x | | | |
| | | R00_H | R00_L |
| | R10_H | R10_L | 0 |
| | R01_H | R01_L | 0 |
| R11_H | R11_L | 0 | 0 |
| R11_H+((R10_H+R01_H+R11_L)+(R10_L+R01_L+R00_H)_H)_H | ((R10_H+R01_H+R11_L)+(R10_L+R01_L+R00_H)_H)_L | (R10_L+R01_L+R00_H)_L | R00_L |

| | | | | | a1 | | 0 | 0 a0 |
| x | | | | | b1 | | 0 | 0 b0 |
| | | | 0 | 0 | | 0 | 0 R00_H | R00_L |
| | | | 0 | 0 R10_H | R10_L | 0 | 0 | 0 |
| | | | 0 | 0 R01_H | R01_L | 0 | 0 | 0 |
| R11_H | R11_L | | 0 | 0 | 0 | 0 | 0 | 0 |
| R11_H | R11_L | | 0 (R10_H+R01_H)_H | (R10_L+R01_L)_H | (R10_H+R01_H)_L+ (R10_L+R01_L)_L | | 0 R00_H | R00_L |

**Fig. 4**

# Fig. 5

S11 — Generating a concatenated integer

S12 — Obtaining each coefficient ci of the polynomial result

P1

S21 — Performing said cryptographic algorithm using said determined polynomial result

P2

# Fig. 6

|       | 0 | 3 | 0 | 2 4 | A b0 |
|-------|---|---|---|-----|------|
| R0    | 1 | 2 | 0 | 8   | c0=08 |
| R0>>2 | 0 | 0 | 1 | 2   |      |

|       | 0 | 3 | 0 | 2 5 | A b1 |
|-------|---|---|---|-----|------|
|       | 1 | 5 | 1 | 0   |      |
| R1    | 1 | 5 | 2 | 2   | c1=22 |
| R1>>2 | 0 | 0 | 1 | 5   | c2=15 |

Europäisches
Patentamt

European
Patent Office

Office européen
des brevets

# EUROPEAN SEARCH REPORT

Application Number

EP 22 30 6367

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AYGUN SERCAN ET AL: "Karatsuba Ofman Multiplication implementation on SystemC for Diffie-Hellman Key Exchange algorithm", 2017 IEEE 4TH INTERNATIONAL CONFERENCE ON KNOWLEDGE-BASED ENGINEERING AND INNOVATION (KBEI), 22 December 2017 (2017-12-22), pages 0641-0645, XP055959004, DOI: 10.1109/KBEI.2017.8324878 ISBN: 978-1-5386-2640-5 Retrieved from the Internet: URL:https://ieeexplore.ieee.org/stampPDF/g etPDF.jsp?tp=&arnumber=8324878&ref=aHR0cHM 6Ly9pZWVleHBsb3JlLmllZWUub3JnL2Fic3RyYWN0L 2RvY3VtZW50LzgzMjQ4Nzg=> * title, abstract, sections III, IV, V, table I * ----- | 1-7 | INV. H04L9/30 |
| X | LI AOBO ET AL: "A Flexible and High-Performance Lattice-Based Post-Quantum Crypto Secure Coprocessor", IEEE TRANSACTIONS ON INDUSTRIAL INFORMATICS, IEEE SERVICE CENTER, NEW YORK, NY, US, vol. 19, no. 2, 24 August 2022 (2022-08-24), pages 1874-1883, XP011930465, ISSN: 1551-3203, DOI: 10.1109/TII.2022.3195743 [retrieved on 2022-08-25] * sections II, III, figures 2, 3, 6, algorithm 4 * ----- -/-- | 1-7 | TECHNICAL FIELDS SEARCHED (IPC) H04L |

The present search report has been drawn up for all claims

| Place of search | Date of completion of the search | Examiner |
|---|---|---|
| Munich | 23 February 2023 | Spranger, Stephanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................
& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

**EP 22 30 6367**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PRASANNA RAVI ET AL: "Lattice-based Key Sharing Schemes - A Survey", IACR, INTERNATIONAL ASSOCIATION FOR CRYPTOLOGIC RESEARCH , vol. 20201014:182155 13 October 2020 (2020-10-13), pages 1-39, XP061041537, Retrieved from the Internet: URL:http://eprint.iacr.org/2020/1276.pdf [retrieved on 2020-10-13] * section 5 * | 1-7 | |

TECHNICAL FIELDS
SEARCHED      (IPC)

The present search report has been drawn up for all claims

| Place of search | Date of completion of the search | Examiner |
|---|---|---|
| Munich | 23 February 2023 | Spranger, Stephanie |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

                         

& : member of the same patent family, corresponding
   document

EPO FORM 1503 03.82 (P04C01)

18